Europäisches Patentamt

**European Patent Office**

**Office européen des brevets**

(11) Publication number: **0 023 678**
A1

## EUROPEAN PATENT APPLICATION

(21) Application number: **80104374.6**

(22) Date of filing: **24.07.80**

(51) Int. Cl.³: **C 01 B 31/08**, C 01 B 31/14

(30) Priority: **01.08.79 US 62839**

(43) Date of publication of application: **11.02.81**
**Bulletin 81/6**

(84) Designated Contracting States: **BE DE FR IT NL**

(71) Applicant: **THE CARBORUNDUM COMPANY, 345 Third Street Post office Box 156, Niagara Falls, New York 14302 (US)**

(72) Inventor: **Smudski, Paul Allen, 19 Alan Court, Grand Island New York 14072 (US)**

(74) Representative: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)**

(54) Hard granular activated carbon manufactured from sub-bituminous coal treated with solid boric acid and process for preparing same.

(57) Hard granular activated carbon is manufactured from subbituminous coal by blending to obtain a uniform mixture including the coal, from about 1% to about 10% by weight of solid boric acid and 0 to about 10% by weight of a carbonaceous binder such as pitch, pulverizing the mixture to form fine powder having a moisture content of not less than about 10% and not more than about 25% by weight prior to compressing the powder into shapes, which are crushed to form 6/20 mesh granules, which are subjected to appropriate heat treatment until activated. The activated granules are suitable for liquid or gas phase applications depending upon the amount of acid used.

EP 0 023 678 A1

COMPLETE DOCUMENT

# HARD GRANULAR ACTIVATED CARBON
## MANUFACTURED FROM SUB-BITUMINOUS COAL
### TREATED WITH SOLID BORIC ACID
### AND PROCESS FOR PREPARING SAME

### BACKGROUND OF THE INVENTION

1. Field of the Invention

This invention relates to granular activated carbon manufacture, and more particularly to a new and improved process for making hard granular activated carbon from sub-bituminous coal treated with solid boric acid, and to a new and improved hard granular activated carbon made by such process and having properties which make it suitable for use in liquid or gas phase applications, depending upon the amount of acid employed.

2. Glossary of Terms

In order to facilitate a clear understanding of this invention, various terms of art employed herein are defined as follows.

Abrasion number - is a measure of the resistance of the activated carbon granules to degrading on being mechanically abraded. It is measured by contacting a sample with steel balls in a pan on a machine and shaking the contents for a given time and determining the resultant particle size distribution and hence the mean particle diameter. The abrasion number is the ratio of the final average (mean) particle diameter to the original average (mean) particle diameter (determined by screen analysis) times 100.

<u>Activated carbon</u> - is carbon which is "activated" by heating to high temmperature preferably with steam of carbon dioxide as the gaseous activating agent in producing an internal porous particle structure.

<u>Activation or activating</u> - means heating coal at high temperatures on the order of about 600°C. to about 1100°C. in the presence of a gaseous activating agent, as is well known in the art. The heating rate during activation from the minimum activation temperature to the maximum activation temperature may vary widely, e.g., from about 100° to about 1000°C. per hour, but usually is nearer 100°C. per hour.

<u>Adsorption isotherm</u> - is a measurement of the adsorptive capacity of an adsorbent (viz. granular activated carbon) as a function of the concentration, or pressure, of the adsorbate (viz. $N_2$) at a given temperature. It is defined as the constant temperature relationship between the amount absorbed per unit weight of adsorbent and the equilibrium concentration, or partial pressure.

<u>Apparent density</u> - is the weight per unit volume of homogeneous granular activated carbon. To assure uniform packing of the granules during measurement, a vibrating trough is used to fill the measuring device.

<u>Ash</u> - is a principal mineral constituent of coal, carbon and pitch. It is normally defined as a weight percent basis after a given amount of sample is reduced to ash.

<u>Average (mean) particle diameter</u> - is a weighted average diameter of a granular activated carbon sample. A screen analysis is run and the average particle diameter is calculated by multiplying the weight of each fraction by its average diameter, adding the products, and dividing by the total weight of the sample. The average diameter of each fraction is taken as the size midway between the sieve opening through which the fraction has passed and the sieve opening on which the fraction was retained. It usually is expressed in mm.

Carbon tetrachloride activity number - is the steady state percentage increase in the weight of a bed of activated carbon after air which has been saturated with carbon tetrachloride at $0^{\circ}$C. is passed through the carbon at $25^{\circ}$C. It is expressed as a percentage number.

Charring - means heating coal at low temperatures on the order of about $175^{\circ}$C. to about $275^{\circ}$C. in the presence of oxygen.

Coking value - is usually expressed as percent residual carbon obtained when a dry sample of coal, tar or pitch is vaporized or pyrolized for a specific time at a specific temperature that limits the available oxygen supply (ASTM Method D-2416). The coking value, expressed as percent residual carbon, indicates the coke forming properties of the material.

Devolatilizing - means heating coal at intermediate temperatures on the order of about $400^{\circ}$C. to about $600^{\circ}$C. in an oxygen-free atmosphere.

Direct activation or directly activating - means heating a coal, preferably in a granular form, directly (without prior charring and devolatilization) and rapidly (at a heating rate of about $500^{\circ}$C per hour or more) to an activating temperature higher than the devolatilization temperature (of the order of $600^{\circ}$ to $1100^{\circ}$C.) in an atmosphere containing a gaseous activating agent and maintaining the desired activating temperature for the desired period of time.

Granular activated carbon - is "activated carbon" which has a particle size, i.e., "mesh", which is not less than about 60 and preferably not less than about 40.

Iodine number - is the milligrams of iodine adsorbed by one gram of granular activated carbon at an equilibrium filtrate concentration of 0.02 N iodine. It is measured by contacting a single sample of carbon with an iodine solution and extrapolating to 0.02 N by an assumed isotherm slope. This number can be correlated with the ability of granular activated carbon to adsorb low molecular weight substances.

Mesh - (or mesh size) is the particle size of granules as determined by the U.S. Sieve Series or the Tyler Series. Usually, this term refers to the sizes of the two screens, in either of the above Series, between which the bulk of a sample falls. For example, "8/30 mesh" (or "8 by 30 mesh" or "8 x 30 mesh") means that 90% by weight of the sample will pass through a No. 8 screen but will be retained on a No. 30 screen. Alternatively, this term refers to a maximum particle size, such as in defining the fineness of powder material. For example, "65% by weight-325 mesh powder" means that 65% by weight of a given sample passes through a No. 325 mesh screen.

Molasses number - is calculated from the ratio of the optical densities of the filtrate of a molasses solution treated with a standard activated carbon and the activated carbon in question.

Pitch - is a black or dark viscous substance obtained as a residue in the distillation of organic materials and especially tars.

Powder - means powdered activated carbon which has a particle size, i.e., "mesh", which is smaller than about 40 and preferably smaller than about 60. The larger the mesh number, the smaller the size.

Sub-bituminous coal - is an intermediate stage coal which ranks above lignite and brown coals, but below bituminous coal. In the as received condition it has, by weight, (1) approximate analysis of: from about 10% to about 25% moisture, from about 35% to about 45% volatile material, from about 2% to about 5% ash, and from about 25% to about 45% fixed carbon, and (2) an ultimate analysis of: from about 65% to about 75% carbon, from about 4% to about 8% hydrogen, from about 0.6% to about 2.0% nitrogen, and from about 0.5% to about 1.0% sulfur. See ASTM Standard D-388-66.

Surface area - is the amount of surface area per unit weight of granular activated carbon; it is determined from the nitrogen adsorption isotherm by the Brunauer, Emmett and Teller (BET) method, and it is expressed in $m^2$/gram.

Volumetric Iodine and Molasses Numbers - are determined by multiplying by the apparent density, in order to express these properties independently of such density.

3.    Discussion of Art

Granular activated carbon is useful in both liquid and gas phase applications. In the former, granular activated carbon has been found to be particularly useful in water and waste water treatment, not only because it is highly effective in purifying the intake, as well as the effluent from municipal and industrial systems, but also because it can be regenerated for repeated use. However, in order to accomplish these objectives, it must possess certain properties, namely a minimum surface area of about 900 $m^2$/gram for adequate adsorption capacity, a minimum volumetric Iodine number of about 410, preferably about 480, for adequate adsorption, especially of low molecular weight substances, a minimum volumetric Molasses number of about 90, preferably about 100, for adequate decolorizing, a maximum ash content (by weight) of not more than about 12%, and preferably not more than about 8% for purity, a minimum abrasion number of about 70 and preferably not less than about 80, for adequate hardness in maintaining granular integrity in use and in regeneration, and a minimum apparent density of not less than about 0.46 gram/cc, preferably not less than about 0.48 gram/cc, for obtaining the dense, closely packed beds and columns needed in water and waste water treatment.

In gas phase applications, granular activated carbon also is particularly useful for gas and air purification. In addition to the above properties of density, hardness and purity, the volumetric Iodine number should not be below a minimum of about 460 and the volumetric Molasses number should be less than 90, preferably a volumetric Iodine number of at least about 480 and a volumetric Molasses number of not more than about 85. Likewise, the carbon should have a minimum carbon tetrachloride number of about 50, preferably at least about 60.

Hard granular activated carbon can be obtained from bituminous, sub-bituminous and brown coals, such as disclosed in U.S. Patents 4,144,193, 4,032,476, 4,131,566, 4,149,994, 4,149,995, and 4,157,314.

However, in each of these patents, liquid mineral acids were employed, and until the present invention, it was not known that anyone else had accomplished this objective by solid boric acid treatment of sub-bituminous coal.

In the '193, '566, and '994 patents, a dilute aqueous solution of inorganic mineral acid was employed, requiring an acid removal step prior to further processing, in order to avoid corrosion of the heat treating equipment. In the '476 and '995 patents, a small amount of concentrated mineral acid was mixed with the coal granules, thereby eliminating the acid removal step, but requiring special lining of the heat treating equipment in order to avoid the corrosive action of the acid.

As for the heat treatment itself, each of the aforesaid patents except the '566 patent discloses the elimination of the charring or low temperature heat oxidation step found to be necessary in dealing with bituminous coal. In the '566 patent, both the acid treatment and charring steps were found to be necessary for attaining the desired results when treating low rank agglomerating but not good coking bituminous coal. In the '314 patent, it has been found that both the charring and devolatilization steps could be eliminated prior to the activation step.

Likewise the disclosures of U.S. Patents 3,483,134, 3,876,505, and 4,014,817 are of interest, but each requires the charring or low temperature heat oxidation step, and none discloses a hard granular activated carbon product.

While the use of aqueous boric acid has been disclosed in U.S. Patent 1,438,113 for making decolorizing carbon, the source material was of either vegetable or animal origin, with the boric acid merely being considered as a possible substitute for the preferred phosphoric acid in the aqueous solution, and with the liquid acid constituting at least one third and preferably two thirds of the mixture prior to carbonization. Hence, this patent does not teach the manufacture of hard granular activated carbon from sub-bituminous coal treated with a considerably smaller amount of solid boric acid.

Moreover, U.S. Patent 2,437,174 discloses the use of an aqueous solution of boric acid in treating vegetable matter in order to produce active carbon by burning in air, with sufficient liquid boric acid being used until 1-15% by weight of boron compound is impregnated into the material. Once again, the patent does not suggest employing solid boric acid to treat mineral matter such a sub-bituminous coal nor producing a hard granular activated carbon, but rather a fibrous product. In each of these two patents, the resulting product is leached with water to extract the boric acid following the heat treatment.

In contrast, in the present inventive process, recognition of the property of boric acid as being solid at room temperature permits the use of a considerably smaller amount of this acid in solid form, in order to simplify the production of hard granular activated carbon, with the amount of the solid acid employed determining the suitability of the resulting hard granular product for use in liquid or gas phase applications. Although the coal, as received, may be crushed and sized to form granules prior to blending with the solid boric acid followed by powderizing, this is not absolutely necessary, because the coal and solid boric acid readily may be simultaneously blended and reduced to form a uniform mixture in fine powder form, with or without the admixture of a carbonaceous binder such as pitch. This is particularly helpful when treating the coal on a large scale, because the initial granulating step can be eliminated, and the blending and powderizing steps can be combined. Moreover, there is no necessity for washing out the boric acid either prior to or following the appropriate heat treatment, which not only eliminates the charring or low temperature heat oxidation step, but also can eliminate the separate devolatilizing step, such as by direct activation.

Alternatively, the blending step can precede the powderizing step, and separate devolatilization and activation steps can be employed, with the charring step being eliminated in any event.

## SUMMARY OF THE INVENTION

Accordingly, a primary objective of the present invention is (1) to provide a new and improved process for making hard granular activated carbon from sub-bituminous coal wherein the acid treatment is greatly simplified by completely eliminating not only the need for separate initial granulating and blending steps, as well as the use of an elevated temperature during blending, as when an acid in liquid form is employed, but also any necessity for removing the acid, either prior to or following heat treatment, which is further simplified by elimination of the charring or low temperature oxidation step or both this step and the separate devolatilization step prior to activation; (2) to provide a new and improved hard granular activated carbon made by such process and having the aforementioned desired properties of adsorption (as measured by volumetric Iodine number and carbon tetrachloride number), decolorization (as measured by volumetric Molasses number), purity (as measured by ash content), hardness (as measured by abrasion number), and density (as measured by apparent density), which make it suitable for use in liquid and/or gas phase applications.

0023678

To this end, the invention includes (1) a process for making hard granular activated carbon from sub-bituminous coal comprising: compressing fine powder containing the coal to form shapes, reducing the shapes to form granules, and heat treating the granules until activated, wherein the improvement comprises: blending and reducing a uniform mixture including the coal, from about 1% to about 10% of solid boric acid, and 0% to about 10% of carbonaceous binder to form such fine powder having a moisture content of not less than about 10% and not more than about 25% prior to compressing, and (2) hard granular activated carbon made by such process and having the physical characteristic of high granular integrity permitting repeated handling, use, regeneration and reuse. All percentages used herein are by weight, unless otherwise specified, and the shapes formed by compressing may be of various configurations larger than the granules such as pellets, briquettes, thin sheets of corrugated cross section, etc.

Another object is to provide such process wherein the mixture is blended either before or simultaneously with reduction of the mixture to form the powder.

A further objective is to provide such a process wherein the amount of acid employed is selected to make the resulting hard granular activated carbon suitable for use in liquid and/or gas phase applications. For liquid phase applications, the acid range should be from about 1% to about 5%, preferably from about 2% to about 3%. For gas phase applications, the acid range should be from 5% to about 10%, preferably from about 7% to about 9%.

Additional objectives and advantages of the invention will become apparent upon consideration of the following detailed description and accompanying drawing wherein:

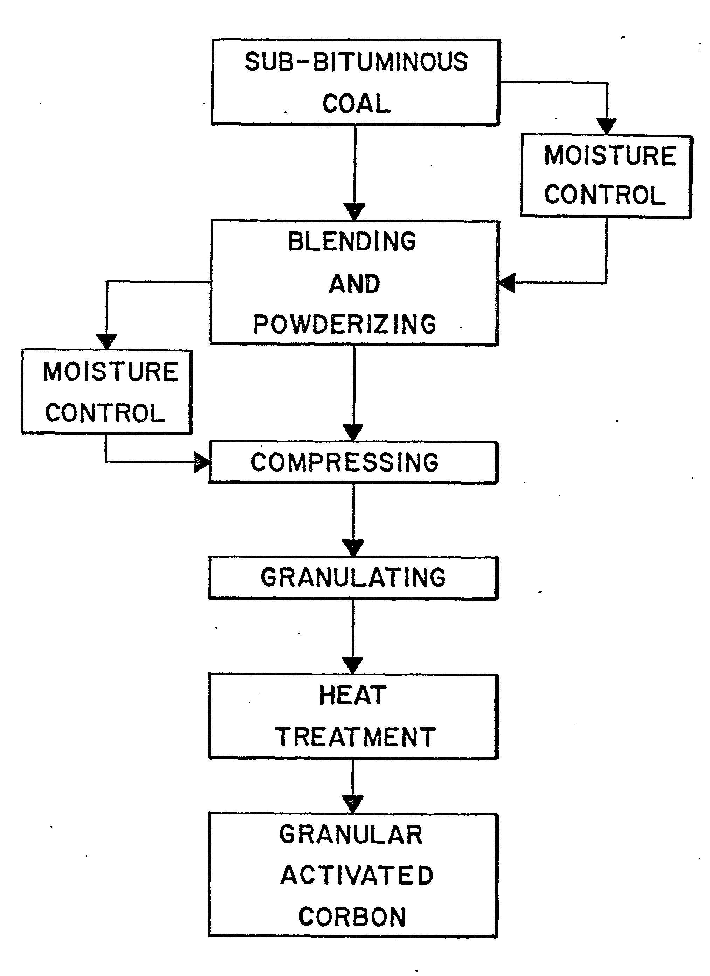

BRIEF DESCRIPTION OF THE DRAWING

The single FIGURE is a block diagram or flow sheet

11

0023678

illustrating schematically the various steps of the process, as well as the resulting product, both embodying the invention.

## DESCRIPTION OF THE PREFERRED EMBODIMENTS

In this detailed description, reference will be made to eight Examples which are illustrative of the invention.

The following Examples 1-8 represent preferred embodiments of the present invention, which is represented schematically in the drawing. Referring to the drawing, it is to be noted that the sub-bituminous coal, as defined above, usually contains in the as-received condition, a moisture content of from about 10% to about 25%. Under such circumstances, it is neither necessary nor desirable to further adjust or control the moisture content of the coal prior to further processing. However, should the coal be unusually dry or unusually wet, the moisture can be adjusted to facilitate further processing as indicated in the upper right hand corner of the drawing. Likewise, the moisture adjustment can take place prior to compressing the fine powder, as indicated in the upper left hand side of the drawing. The important point to keep in mind as to moisture control is that the powder prior to compressing has a moisture content of not less than about 10% and not more than about 25% so that the shapes produced during compression will become densely packed and yield compact granules suitable for obtaining hard granular activated carbon following heat treatment. Continuing with the drawing, it is noted that the blending and powderizing steps are schematically illustrated together, although the blending step could be performed as a separate step following an initial granulation step and prior to the powderizing step, and if desired, moisture adjustment could be made prior to or between such separate steps.

Likewise, the heat treatment of the granules is generally indicated in the drawing, but this general indication is intended to include either the direct activation or separate devolatilization and activation steps, but without a charring or low temperature heat oxidation step in any event.

The various batches of sub-bituminous coal employed in the ensuing Examples, had the following typical weight percent analysis, in the as received condition and on a dry basis:

### PROXIMATE ANALYSIS

|  | As Received | Dry |
|---|---|---|
| Moisture | 18.1 | — |
| Volatile Material | 35.86 | 43.78 |
| Ash | 2.95 | 3.605 |
| Fixed Carbon | 43.09 | 52.61 |

### EXAMPLE 1

2000 grams of coal of 8/20 mesh, 174 grams of coal tar pitch (7.86%) and 40 grams of solid boric acid (1.81%) were blended by stirring together in a Hobart mixer for approximately 10 minutes. The mixture was pulverized in a hammer mill to give a powder, 91% of which passed through a standard 325 mesh screen. The powder was compacted into cylindrical pellets approximately 0.5 inch in diameter and 0.5 inch high, and having a density of 1.06 grams/cc. These pellets were crushed in a jaw mill and granules in the size range of −6 + 20 (6/20) were selected for further processing.

600 grams of the 6/20 mesh granules were placed in a stainless steel screen basket which was caused to be rotated within a tube furnace at about 2 rpm. The furnace was constructed so that the gaseous environment of the basket and granules could be controlled. The granules were heated to about 470°C while in an inner atmosphere of nitrogen or argon, and this temperature and atmosphere were maintained for 1 hour, after which time the material was allowed to cool to room

0023678

temperature. 362 grams of carbonized (i.e., devolatilized) material (+20 mesh) with an apparent density of 0.651 grams/cc were obtained, giving a yield on devolatilization of 60.3%.

300 grams of this material were activated as follows: the granules were placed in a controlled atmosphere rotary kiln and were heated to a temperature of $870^\circ$C under a nitrogen flow, at which time steam carried by flowing nitrogen was passed through the system at a rate corresponding to about 700 grams of water per hour. This was continued for a period of 2 hours, after which time the material was allowed to cool to room temperature under flowing nitrogen. 139 grams of granular activated carbon (+30 mesh) were obtained, producing an activation yield of 46.3% and an overall yield of 28%. The activated granules have the following properties: apparent density 0.480 gram/cc; Iodine number 1045 (volumetric 502); Molasses number 217 (volumetric 104), abrasion number 89, and mean particle diameter 1.70 mm.

## EXAMPLE 2

The procedure of Example 1 was repeated, with the following differences. 50 grams of boric acid (2.25%) were used, which made the pitch content 7.82%, with 90% of the fine powder being -325 mesh. The pellets had a density of 1.19 grams/cc, and following crushing, the granules were heated to about $600^\circ$C for devolatilization. 346 grams of the devolatilized granules were obtained with an apparent density of 0.643 gram/cc, producing a devolatilization yield of 57.6%.

The activation was continued for a period of 2.5 hours producing 154 grams of granular activated carbon, with an activation yield of 51% and an overall yield of 27% (57.6 x 51/100 = 29.4%). The activated granules had an apparent density of 0.488 gram/cc, an Iodine number of 1027 (volumetric 501), a Molasses number of 228 (volumetric 111), an abrasion number of 82 and a mean particle diameter of 1.53 mm.

14

0023678

## EXAMPLE 3

The procedure of Example 2 was repeated, except that 1000 grams of coal were blended with 87 grams of pitch (7.79%) and 30 grams of boric acid (2.68%). The density of the pellets was 1.2 grams/cc, and following crushing and devolatilization, 331 grams of granules were obtained, with an apparent density of 0.652 gram/cc, producing a devolatilization yield of 55%. Following activation, 154 grams of granular activated carbon were obtained, producing an activation yield of 52% and an overall yield of 29%. The activated granules had the following properties: apparent density 0.492 gram/cc; Iodine number 1009 (volumetric 496); Molasses number 247 (volumetric 121), abrasion number 82, and mean particle diameter 1.55 mm.

## EXAMPLE 4

The procedure of Example 3 was repeated, but with the pitch being reduced to 57 grams (5.24%), changing the boric acid content to 2.76%. The pellets had a density of 1.17 grams/cc, and following devolatilization, 309 grams of granules were obtained with an apparent density of 0.644 gram/cc, giving a devolatilization yield of 51.5%. Following activation, 148 grams of granules were obtained, producing an activation yield of 49% and an overall yield of 25%. The activated granules had the following properties: apparent density 0.477 gram/cc; Iodine number 1075 (volumetric 513); Molasses number 236 (volumetric 113); abrasion number 83, ash content 10.31%, and mean particle diameter 1.32 mm.

## EXAMPLE 5

The procedure of Example 4 was repeated, except that 2000 grams of coal were blended with 60 grams of pitch (2.84%) and 50 grams of boric acid (2.37%). The pellets had a density of 1.14 grams/cc, and following devolatilization, 330 grams were produced, having an apparent density of 0.643 gram/cc,

0023678

with a yield on devolatilization of 55%. Activation was continued for 2 hours, resulting in 156 grams of granular activated carbon, with an activation yield of 52% and an overall yield of 29%. The activated granules had an apparent density of 0.491 gram/cc, an Iodine number of 1060 (volumetric 520), a Molasses number of 228 (volumetric 112), an abrasion number of 84, an ash content of 11.7%, and a mean particle diameter of 1.40 mm.

## EXAMPLE 6

The procedure of Example 5 was repeated, except that the boric acid content was increased to 60 grams, thereby changing the boric acid and pitch contents to 2.83% each. The compacted pellets had a density of 1.10 grams/cc, and upon devolatilization, 335 grams having an apparent density of 0.640 gram/cc were obtained, producing a devolatilization yield of 52%.

Activation was continued for a period of 2.25 hours, resulting in 150 grams of activated granules, producing an activation yield of 50% and an overall yield of 26%. The granular activated carbon had the following properties: apparent density 0.483 gram/cc; Iodine number 1004 (volumetric 485); Molasses number 230 (volumetric 111); abrasion number 77, ash content 10.9%, and mean particle diameter 1.32 mm.

## EXAMPLE 7

The procedure of Example 6 was repeated, except that no pitch was employed, which increased the boric acid to 2.91%, and 65% of the powder was -325 mesh. The pellets had a density of 1.27 grams/cc, and following crushing 931 grams of 6/20 mesh granules were devolatilized, obtaining 460 grams with an apparent density of 0.644 gram/cc and a yield on devolatilization of 49.4%.

16

0023678

300 grams were activated for 3.25 hours, producing 151 grams of granular activated carbon, at an activation yield of 50.2% and an overall yield 25%. The activated granules had an apparent density of 0.498 gram/cc, an Iodine number of 1050 (volumetric 523), a Molasses number of 204 (volumetric 102), an abrasion number of 80, an ash content of 11.02%, and a mean particle diameter of 1.56 mm.

From the foregoing Examples 1-7, it will be seen that an excellent water phase granular activated carbon can be produced by the inventive process, with or without the use of a carbonaceous binder such as pitch.

The next Example is designed to demonstrate the applicability of the inventive process to successfully producing a gas phase granular activated carbon.

### EXAMPLE 8

The procedure of Example 6 was repeated, except that 180 grams of pitch (7.56%) and 200 grams of boric acid (8.40%) were used. Thus the pellets had a density of 1.30 grams/cc, with 1169 grams of the granules produced on crushing resulting in 624 grams of devolatilized granules having an apparent density of 0.617 gram/cc, giving a yield on devolatilization of 53.4%.

Activation was continued for a period of 3 hours and 5 minutes. 153 grams of granular activated carbon was produced upon activation, giving an activation yield of 51% and an overall yield of 27%. The activated granules have the following properties: apparent density 0.461 gram/cc; Iodine number 1090 (volumetric 502); Molasses number 183 (volumetric 84); carbon tetrachloride number 73.9; abrasion number 72, ash content 10.85%, and mean particle diameter 1.55 mm.

From this Example, it will be seen that an excellent gas phase carbon can be produced by the inventive process where the boric acid content is increased above 5%.

From the foregoing specific Examples, it is evident that hard granular activated carbon suitable for use in liquid or gas phase applications can be obtained by treatment with a relatively small amount (about 1 to about 10%) of solid boric acid, with the specific amount of boric acid needed being adjusted within the overall range to produce a liquid phase carbon (about 1% to about 5% acid) or a gas phase carbon (5% to about 10% acid). The term "boric acid" as used herein commercially has the formula $H_3BO_3$ and is also known as ortho-boric acid or boracic acid, and this was the particular form of the acid actually used in the aforesaid Examples. However, this term is intended to encompass metaboric acid, having the formula $HBO_2$ and tetra- (or pyro-) boric acid, having the formula $H_2B_4O_7$, because these forms of boric acid also are solid at room temperature, and are composed of the same elements in slightly different proportions.

18

0023678

WHAT IS CLAIMED IS:

1.   A process for making hard granular activated carbon from sub-bituminous coal comprising:  compressing fine powder containing said coal to form shapes, without charring, reducing said shapes to form granules, and heat treating said granules until activated, wherein the improvement comprises:  blending and reducing a uniform mixture including said coal, from about 1% to about 10% of solid boric acid, and 0% to about 10% of carbonaceous binder to form said fine powder having a moisture content of not less than about 10% and not more than about 25% prior to said compressing.

2.   Hard granular activated carbon made by the process of claim 1.

3.   The process of claim 1 wherein said mixture is blended before being reduced to form said powder.

4.   The process of claim 1 wherein said mixture is blended and reduced simultaneously.

5.   The process of claim 1 wherein said mixture includes from about 1 to about 5% of said acid, the amount being selected to provide a minimum volumetric Iodine number of about 410 and a minimum volumetric Molasses number of about 90.

6.   Hard granular activated carbon made by the process of claim 5, being suitable for use in liquid phase applications and having a minimum abrasion number of about 70.

7.   The process of claim 1 wherein said mixture includes from about 2% to about 3% of said acid, the amount being selected to provide a minimum volumetric Iodine number of about 480 and a minimum volumetric Molasses number of about 100.

0023678

8.   Hard granular activated carbon made by the process of claim 7, being suitable for use in liquid phase applications and having a minimum abrasion number of about 75.

9.   The process of claim 1 wherein said mixture includes from 5% to about 10% of said acid, the amount being selected to provide a minimum volumetric Iodine number of about 460 and a volumetric Molasses number below about 90.

10.   Hard granular activated carbon made by the process of claim 9, being suitable for use in gas phase applications and having a minimum carbon tetrachloride number of about 50.

11.   The process of claim 1 wherein said mixture includes from about 7% to about 9% of said acid, the amount being selected to provide a minimum volumetric Iodine number of about 480 and a volumetric Molasses number below about 85.

12.   Hard granular activated carbon made by the process of claim 11, being suitable for use in gas phase applications and having a minimum carbon tetrachloride number of about 60.

RCW:dr
7/26/79

0023678

1/1

```
        ┌─────────────────┐
        │  SUB-BITUMINOUS │────────┐
        │      COAL       │        ▼
        └─────────────────┘   ┌──────────┐
                 │            │ MOISTURE │
                 │            │ CONTROL  │
                 ▼            └──────────┘
        ┌─────────────────┐        │
   ┌────│    BLENDING     │◄───────┘
   │    │      AND        │
   ▼    │   POWDERIZING   │
┌──────────┐ └────────────┘
│ MOISTURE │        │
│ CONTROL  │        ▼
└──────────┘ ┌─────────────┐
   │    ───► │ COMPRESSING │
   └────────►└─────────────┘
                   │
                   ▼
            ┌─────────────┐
            │ GRANULATING │
            └─────────────┘
                   │
                   ▼
            ┌─────────────┐
            │    HEAT     │
            │  TREATMENT  │
            └─────────────┘
                   │
                   ▼
            ┌─────────────┐
            │  GRANULAR   │
            │  ACTIVATED  │
            │   CORBON    │
            └─────────────┘
```

| Category | Citation of document with indication, where appropriate, of relevant passages | Relevant to claim | CLASSIFICATION OF THE APPLICATION (Int. Cl.³) |
|---|---|---|---|
| A,P | <u>EP - A1 - 0 004 044</u> (CARBORUNDUM CO.)<br>-- | | C 01 B 31/08<br>C 01 B 31/14 |
| A | <u>EP - A1 - 0 002 674</u> (CARBORUNDUM CO.)<br>-- | | |
| A | <u>EP - A1 - 0 002 275</u> (CARBORUNDUM CO.)<br>-- | | |
| D | <u>US - A - 4 014 817</u> (B.C. JOHNSON et al.)<br>-- | | |
| D | <u>US - A - 3 876 505</u> (G.R. STONEBURGER)<br>-- | | **TECHNICAL FIELDS SEARCHED (Int.Cl.³)** |
| D | <u>US - A - 2 437 174</u> (F.K. SIGNAIGO)<br>-- | | |
| D | <u>US - A - 1 438 113</u> (C.S. HUDSON)<br>---- | | C 01 B 31/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search<br>Berlin | Date of completion of the search<br>07-11-1980 | Examiner<br>KESTEN |
|---|---|---|

EPO Form 1503.1  06.78